# EUROPEAN PATENT APPLICATION

(11) **EP 1 923 954 A1**
(43) Date of publication of application: **21.05.2008**
(21) Application number: 07021742.7
(22) Date of filing: 08.11.2007
(51) Int. Cl.: H01Q 1/24, H01Q 3/26, H01Q 21/24, H04B 7/06, H04B 7/10

(54) **Radio communication system and radio communication apparatus**

(30) Priority: 15.11.2006 JP 2006308982
(71) Applicant: NEC Corporation, Minato-ku Tokyo (JP)
(72) Inventor: Hirabe, Masashi, Tokyo (JP)
(74) Representative: Glawe, Delfs, Moll

(57) **Abstract**

Disclosed is a radio communication system for performing MIMO transmission including: a first radio communication apparatus including an array antenna in which a plurality of first antennas each having two orthogonally polarized wave characteristics are arranged in an array configuration at predetermined intervals; and a second radio communication apparatus including a plurality of second antennas each having a polarized wave characteristic which are intermediate in angle between the two orthogonally polarized wave characteristics, the plurality of second antennas being arranged at predetermined interval, wherein the first radio communication apparatus forms a directional beam using the array antenna and performs the MIMO transmission using the two orthogonally polarized wave characteristics. The array antenna may be formed by using a plurality of antennas having a right-handed circularly polarized wave characteristic and a left-handed circularly polarized wave characteristic.

## Description

This application is based upon and claims the benefit of priority from Japanese patent application No. 2006-308982, filed on November 15, 2006, the disclosure of which is incorporated herein in its entirety by reference.

### BACKGROUND OF THE INVENTION

### 1. Field of the Invention

The present invention relates to a radio communication system and a radio communication apparatus which perform MIMO (Multiple Input Multiple Output) transmission by wireless communication using a plurality of antennas.

### 2. Description of the Related Art

In recent years, in a radio communication system using a wireless communication technology, improvement of a transmission capacity (throughput) is an indispensable subject. In order to solve the subject, a research and development about a MIMO (Multiple Input Multiple Output) communication system are advanced. In the MIMO communication system, data is transmitted on a wireless transmission line from a plurality of antennas provided in a transmitter, and the data is received in a receiver having a plurality of antennas. That is, in the MIMO communication system, a plurality of antennas are installed in the transmitter and the receiver respectively. Since data are divided and transmitted/received simultaneously (i.e. in a parallel manner) using a plurality of antennas, the transmission capacity can be improved.

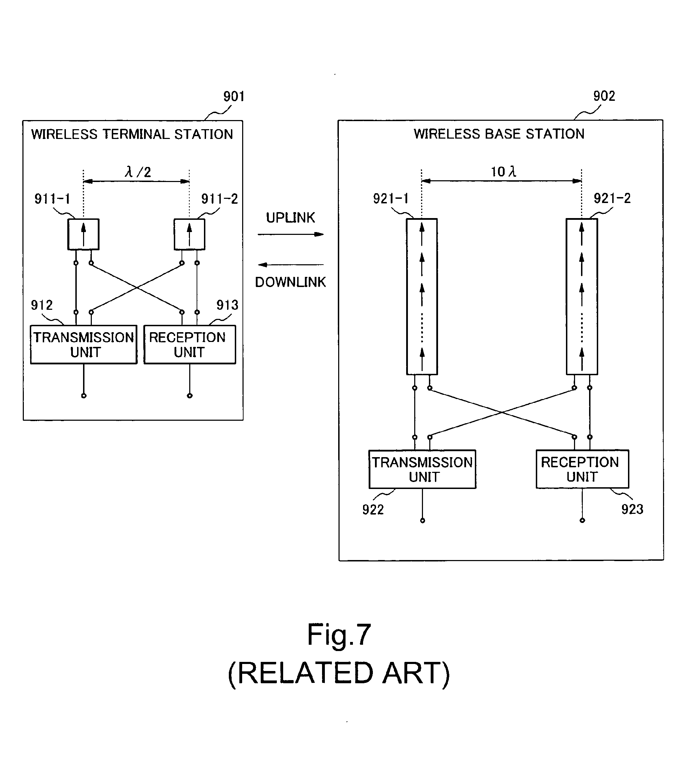

A related art will be described with reference to drawings. Fig. 7 is a block diagram showing an example of a radio communication system configuration of the related art. The radio communication system shown in Fig. 7 includes a wireless terminal station 901 and a wireless base station 902. The wireless terminal station 901 includes antennas 911-1 and 911-2, a transmission unit 912 and a reception unit 913.

The antennas 911-1 and 911-2 have a vertically polarized wave characteristic, and performs transmission and a reception of a wireless signal with the wireless base station 902. A distance between the antenna 911-1 and the antenna 911-2 is λ /2, where λ is a wavelength.

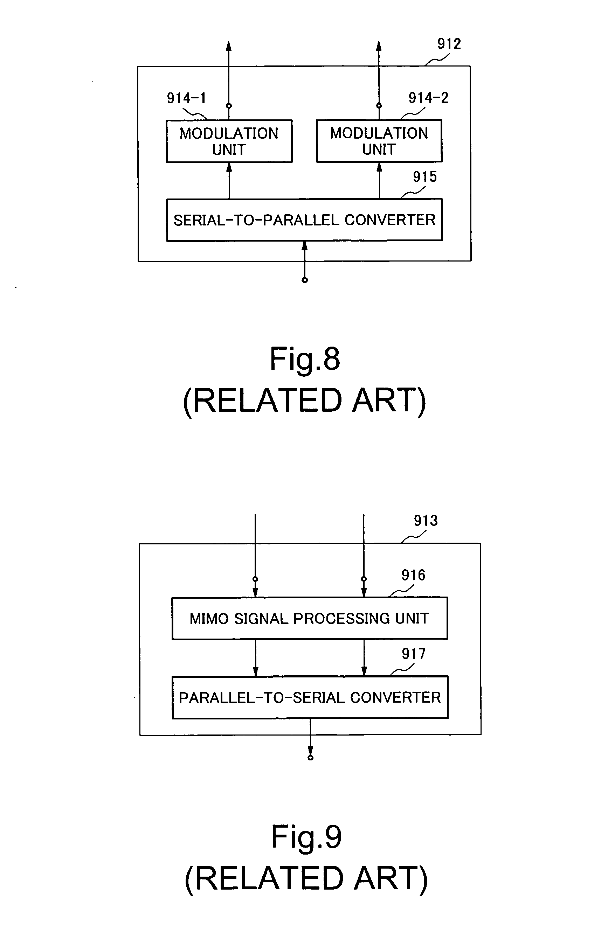

The transmission unit 912 of the wireless terminal station 901 transmits an uplink signal to the wireless base station 902 via the antennas 911-1 and 911-2. Fig. 8 shows a functional block diagram showing an exemplary configuration of the transmission unit 912 of the wireless terminal station 901 in Fig. 7. As shown in Fig. 8, the transmission unit 912 includes modulation units 914-1 and 914-2 and a serial-to-parallel converter 915.

The serial-to-parallel converter 915 converts a serial uplink signal which is transmitted to the wireless base station 902 from the wireless terminal station 901 into a parallel signal. The modulation units 914-1 and 914-2 modulate the parallel uplink signal converted by the serial-to-parallel converter 915 in order to transmit on a wireless transmission line. The uplink signals modulated by the modulation units 914-1 and 914-2 are sent to the antennas 911-1 and 911-2 respectively.

In Fig. 7, the reception unit 913 of the wireless terminal station 901 receives a downlink signal transmitted from the wireless base station 902 via the antennas 911-1 and 911-2. Fig. 9 shows a functional block diagram showing an exemplary configuration of the reception unit 913 of the wireless terminal station 901 in Fig. 7. As shown in Fig. 9, the reception unit 913 includes a MIMO signal processing unit 916 and a parallel-to-serial converter 917.

The MIMO signal processing unit 916 performs well-known MIMO signal processing for the downlink signal received via the antennas 911-1 and 911-2. The parallel-to-serial converter 917 converts a parallel downlink signal processed in the MIMO signal processing unit 916 into a serial signal.

As shown in Fig. 7, the wireless base station 902 includes antennas 921-1 and 921-2, a transmission unit 922 and a reception unit 923. The antennas 921-1 and 921-2 have vertically polarized wave characteristics, and perform a transmission and a reception of a wireless signal with the wireless terminal station 901. A distance between the antenna 921-1 and the antenna 921-2 is 10λ, where λ is a wavelength (i.e. ten times of a wavelength) because it is necessary to make a predetermined interval between the antennas in order to reduce fading correlation.

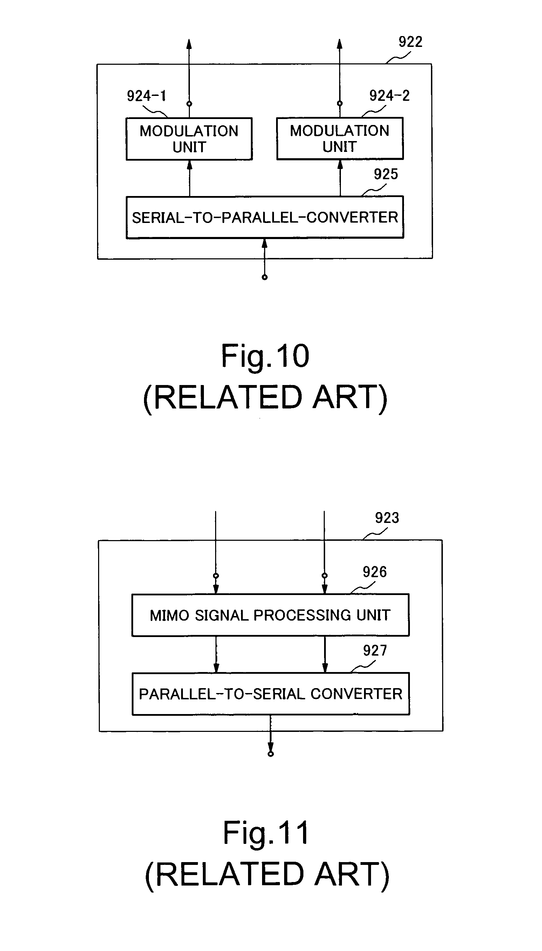

The transmission unit 922 transmits the downlink signal to the wireless terminal station 901 from the wireless base station 902 via the antennas 921-1 and 921-2. Fig. 10 shows a functional block diagram showing an exemplary configuration of the transmission unit 922 in the wireless base station 902 in Fig. 7. As shown in Fig. 10, the transmission unit 922 includes modulation units 924-1 and 924-2 and a serial-to-parallel converter 925.

The serial-to-parallel converter 925 converts the downlink signal transmitted to the wireless terminal station 901 from the wireless base station 902 from a serial signal into a parallel signal. The modulation units 924-1 and 924-2 modulate the downlink signal which the serial-to-parallel-converter 925 converts in parallel in order to transmit on a wireless transmission line, and send the modulated down link signal to the antennas 921-1 and 921-2 respectively.

In Fig. 7, the reception unit 923 receives the uplink signal transmitted from the wireless terminal station 901 via the antennas 921-1 and 921-2. Fig. 11 is a functional block diagram showing an exemplary configuration of the reception unit 923 in the wireless base station 902 in Fig. 7. As shown in Fig. 11, the reception unit 923 includes a MIMO signal processing unit 926 and a parallel-to-serial converter 927.

The MIMO signal processing unit 926 performs well-known MIMO signal processing for the uplink signal received via the antennas 921-1 and 921-2. The parallel-to-serial converter 927 converts a parallel uplink signal which the MIMO signal processing unit 926 performs signal processing for, into a serial signal.

The wireless terminal station 901, the wireless base station 902, the transmission units 912 and 922 and the reception units 913 and 923 shown in Fig. 7 to Fig. 11 shows only components or functional blocks which are needed for comparison with features of the present invention.

Signal transmitting and receiving using a MIMO communication system are performed between the wireless terminal station 901 and the wireless base station 902 which are described above.

There are following technologies as other related arts. Japanese Patent Application Laid-Open No. 2005-192185 (U. S. counterpart application thereof is US 2005/0130587 A1) discloses a technology in which MIMO transmission between a wireless base station and a wireless terminal station is performed using a plurality of antenna pairs each having identical polarized wave characteristics. Japanese Patent Application Laid-Open No. 2002-290148 (U. S. counterpart application thereof is US 6801790 B2) discloses MIMO transmission in which one of polarized waves are selected and antenna groups which are spatially separated transmit independent data. Japanese Patent Application Laid-Open No. 2006-33306 discloses a technology in which an excellent MIMO transmission is performed by controlling polarized wave characteristics.

### SUMMARY OF THE INVENTION

An object of the present invention is to realize MIMO transmission and a directional beam formation simultaneously, and thereby to provide a radio communications system and a radio communication apparatus which can carry out high speed and high-quality data transmission.

The present invention provides a radio communication system for performing MIMO transmission including: a first radio communication apparatus including an array antenna in which a plurality of first antennas each having two orthogonally polarized wave characteristics are arranged in an array configuration at predetermined intervals; and a second radio communication apparatus including a plurality of second antennas each having a polarized wave characteristic which are intermediate in angle between the two orthogonally polarized wave characteristics, the plurality of second antennas being arranged at predetermined interval, wherein the first radio communication apparatus forms a directional beam using the array antenna and performs the MIMO transmission using the two orthogonally polarized wave characteristics.

Further, the present invention provides a radio communication apparatus which is used for a radio communication system for performing MIMO transmission, the radio communication apparatus including an array antenna in which a plurality of antennas each having two orthogonally polarized wave characteristics are arranged in an array configuration at predetermined intervals, wherein the radio communication apparatus forms a directional beam using the array antenna and performs the MIMO transmission using the two orthogonally polarized wave characteristics.

Further, the present invention provides a radio communication system for performing MIMO transmission, including: a first radio communication apparatus including an array antenna in which a plurality of first antennas each having a right-handed circularly polarized wave characteristic and a left-handed circularly polarized wave characteristic are arranged in an array configuration at predetermined intervals; and a second radio communication apparatus including a plurality of second antennas each having one of a vertically polarized wave characteristic and a horizontally polarized wave characteristic, the plurality of second antennas being arranged at predetermined interval, wherein the first radio communication apparatus forms a directional beam using the array antenna and performs the MIMO transmission using the right-handed circularly polarized wave characteristic and the left-handed circularly polarized wave characteristic.

Further, the present invention provides a radio communication apparatus used for a radio communication system for performing MIMO transmission, the radio communication apparatus including an array antenna in which a plurality of antennas each having a right-handed circularly polarized wave characteristic and a left-handed circularly polarized wave characteristic are arranged in an array configuration at predetermined intervals, wherein the radio communication apparatus forms a directional beam using the array antenna and performs the MIMO transmission using the two polarized wave characteristics.

### BRIEF DESCRIPTION OF THE DRAWINGS

Exemplary features and advantages of the present invention will become apparent from the following detailed description when taken with the accompanying drawings in which:
Fig. 1 is a functional block diagram showing a configuration of an exemplary embodiment of the present invention;
Fig. 2 is a functional block diagram showing an exemplary configuration of a transmission unit of a wireless terminal station in Fig. 1;
Fig. 3 is a functional block diagram showing an exemplary configuration of a reception unit of the wireless terminal station in Fig. 1;
Fig. 4 is a functional block diagram showing an exemplary configuration of a transmission unit in a wireless base station in Fig. 1;
Fig. 5 is a functional block diagram showing an exemplary configuration of a reception unit in the wireless base station in Fig. 1;
Fig. 6 is a functional block diagram showing a configuration of other exemplary embodiment of the present invention;
Fig. 7 is a functional block diagram showing an example of a radio communication system configuration of related art;
Fig. 8 is a functional block diagram showing an exemplary configuration of a transmission unit of a wireless terminal station in Fig. 7;
Fig. 9 is a functional block diagram showing an exemplary configuration of a reception unit of the wireless terminal station in Fig. 7;
Fig. 10 is a functional block diagram showing an exemplary configuration of a transmission unit in the wireless base station in Fig. 7; and
Fig. 11 is a functional block diagram showing an exemplary configuration of a reception unit in the wireless base station in Fig. 7.

### DESCRIPTION OF THE EXEMPLARY EMBODIMENTS

Exemplary embodiments of the present invention will now be described in detail in accordance with the accompanying drawings.

In order to perform high-speed transmission using a MIMO communication system, it is necessary to enlarge an interval between a plurality of antennas to reduce fading correlation between the plurality of antennas. In order to form a directional beam, it is necessary to decrease an interval between a plurality of antennas to strengthen fading correlation between the plurality of antennas. Therefore, it is difficult to perform MIMO transmission and directional beam formation simultaneously.

Eigen-mode transmission, as a MIMO transmission method is proposed. In the Eigen-mode transmission, a transmission side and a receiving side share transmission line information, and each weighting coefficient of antennas in a transmission side and in a receiving side is calculated. However, the Eigen-mode transmission method needs a mechanism for sharing transmission line information, and the calculation is complicated.

When a usual MIMO transmission is performed, it is necessary to take large space between a plurality of antennas so as to reduce fading correlation therebetween. Thus, antenna installation becomes difficult. The present invention described below was made to solve the problems mentioned above.

### (Configuration)

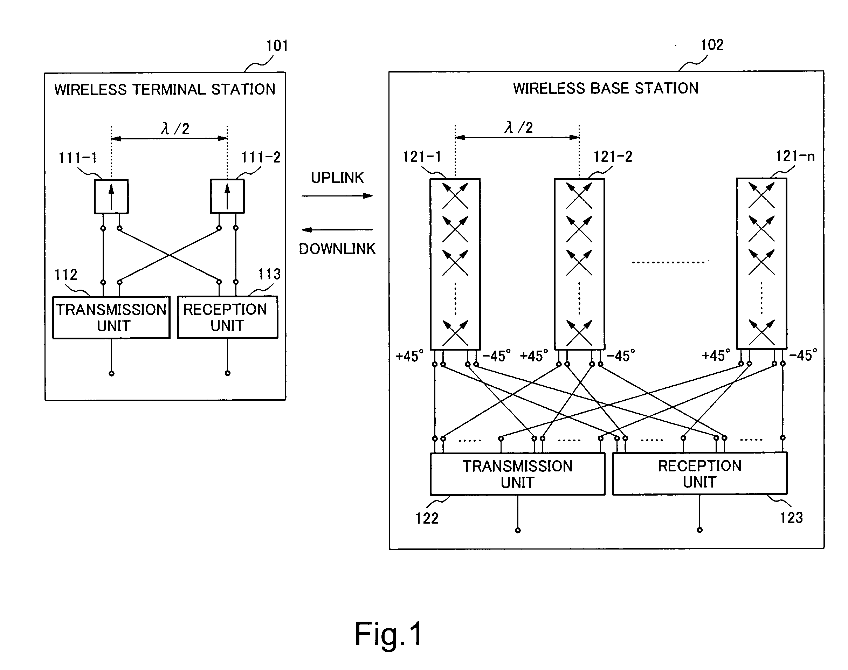

Fig. 1 is a functional block diagram showing a configuration of an exemplary embodiment of the present invention. A radio communication system shown in Fig. 1 includes a wireless base station 102 (a first radio communication apparatus) and a wireless terminal station 101 (a second radio communication apparatus). The wireless terminal station 101 is a mobile terminal which moves in non line of sight, such as "behind a building".

The wireless terminal station 101 includes antennas 111-1 and 111-2, a transmission unit 112 and a reception unit 113. The antennas 111-1 and 111-2 have vertically polarized wave characteristics and transmit and receive a wireless signal with the wireless base station 102. A distance between the antenna 111-1 and the antenna 111-2 is 1/2 λ (λ:wavelength).

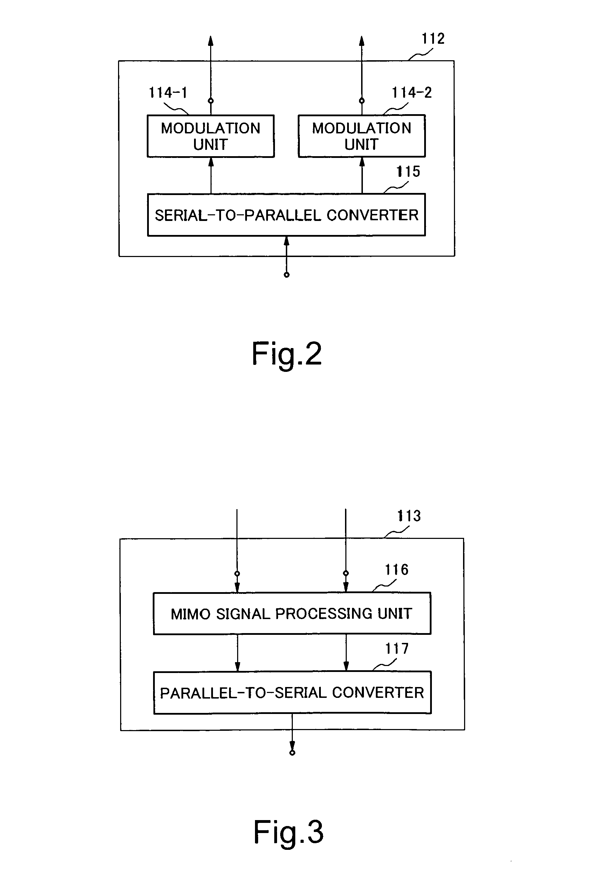

The transmission unit 112 transmits an uplink signal to the wireless base station 102 from the wireless terminal station 101 via the antennas 111-1 and 111-2. Fig. 2 is a functional block diagram showing an exemplary configuration of the transmission unit 112 of the wireless terminal station 101. As shown in Fig. 2, the transmission unit 112 includes modulation units 114-1 and 114-2 and a serial-to-parallel converter 115. The serial-to-parallel converter 115 converts serial uplink signals to be transmitted to the wireless base station 102 into parallel uplink signals. Here, the serial-to-parallel converter 115 divides one data row (i.e. serial signals) into two arbitrary data rows (i.e. parallel signals). The modulation units 114-1 and 114-2 modulate the parallel uplink signals in order to transmit the parallel uplink signals on a radio transmission line. The Modulated parallel uplink signals are output to the antennas 111-1 and 111-2 respectively.

In Fig. 1, the reception unit 113 of the wireless terminal station 101 receives downlink signals transmitted from the wireless base station 102 via the antennas 111-1 and 111-2. Fig. 3 is a functional block diagram showing an exemplary configuration of the reception unit 113 of the wireless terminal station 101. As shown in Fig. 3, the reception unit 113 includes a MIMO signal processing unit 116 and a parallel-to-serial converter 117.

The MIMO signal processing unit 116 performs MIMO signal processing for the downlink signal received via the antennas 111-1 and 111-2. The MIMO signal processing is similar to well-known MIMO signal processing. The parallel-to-serial converter 117 converts parallel downlink signals processed in the MIMO signal processing unit 116 into serial signals. Here, the parallel-to-serial converter 117 converts two data rows (i.e. parallel signals) into one data row (i.e. serial signals).

On the other hand, in Fig. 1, the wireless base station 102 includes a plurality of antennas 121-1 to 121-n (n pieces), a transmission unit 122 and a reception unit 123.

The antennas 121-1 to 121-n transmit and receive wireless signals with the wireless terminal station 101. Each of the antennas 121-1 to 121-n has two polarized wave characteristics with polarizing angles of -45 degrees and +45 degrees to a polarization direction (i.e. a vertical direction) of the antennas 111-1 and 111-2 of the wireless terminal station 101. That is, the polarized wave characteristics of the antennas 111-1 and 111-2 of the wireless terminal station 101 are polarized wave characteristics which are intermediate in angle between two polarized wave characteristics of the antennas 121-1 to 121-n of the wireless base station 102. Each of the antennas 121-1 to 121-n includes a port for polarized wave characteristic of -45 degrees and a port for polarized wave characteristic of +45 degrees, and each of these ports is connected with the transmission unit 122 and the reception unit 123. In the antenna 121-1, for an example, a port for + 45 degree polarized wave transmission, a port for + 45 degree polarized wave reception, a port for -45 degree polarized wave transmission and a port for -45 degree polarized wave reception are provided from the left side thereof in Fig. 1. As described in detail below, these are connected in turn to a transmission beam generation unit 129-1 of the transmission unit 122, a reception beam generation unit 128-1 of the reception unit 123, a transmission beam generation unit 129-2 of the transmission unit 122 and a reception beam generation unit 128-2 of the reception unit 123.

The antennas 121-1 to 121-n are array antennas arranged in an array configuration at λ/2 intervals (λ : wavelength). The antennas 121-1 to 121-n are generally installed in an upper place of the wireless base station 102.

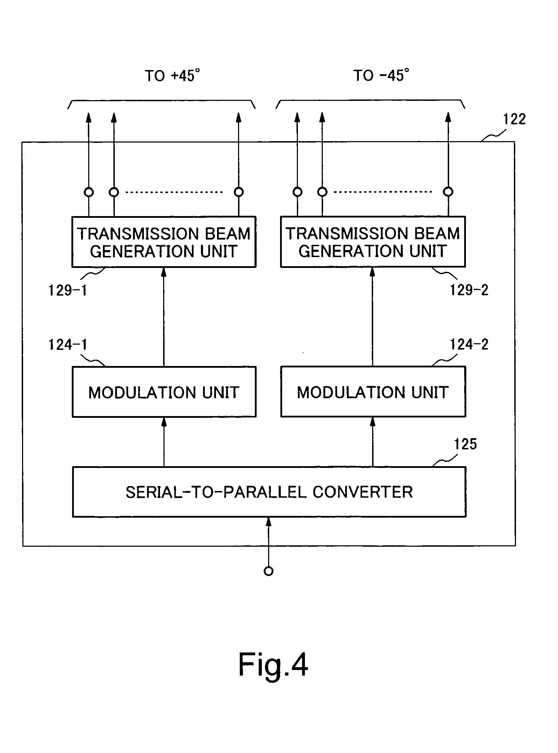

The transmission unit 122 transmits a downlink signal to the wireless terminal station 101 from the wireless base station 102 via the antennas 121-1 to 121-n. Fig. 4 is a functional block diagram showing an exemplary configuration of the transmission unit 122 in the wireless base station 102. As shown in Fig. 4, the transmission unit 122 includes modulation units 124-1 and 124-2, a serial-to-parallel converter 125 and transmission beam generation units 129-1 and 129-2.

The serial-to-parallel converter 125 converts the downlink signal, which is transmitted to the wireless terminal station 101 from the wireless base station 102, from a serial signal into parallel signals. Here, the serial-to-parallel converter 125 divides one data row (serial) into two arbitrary data rows (parallel).

The modulation units 124-1 and 124-2 modulate the downlink signals converted in parallel by the serial-to-parallel converter 125 in order to transmit the down link signal on a radio transmission line. The modulated signals are output to the transmission beam generation units 129-1 and 129-2 respectively.

Each of the transmission beam generation units 129-1 and 129-2 generates a directional beam for the downlink signal output from the modulation units 124-1 and 124-2, respectively. In the exemplary embodiment, output of the transmission beam generation unit 129-1 is sent to each port for +45 degree polarized wave transmission of the antennas 121-1 to 121-n shown in Fig. 1. On the other hand, output of the transmission beam generation unit 129-2 is output to each port for -45 degree polarized wave transmission of the antennas 121-1 to 121-n shown in Fig. 1.

As a result, one of divided two data rows is transmitted with +45 degrees polarized wave characteristic of the antennas 121-1 to 121-n, and the other of divided two data rows is transmitted with -45 degrees polarized wave characteristic of the antennas 121-1 to 121-n.

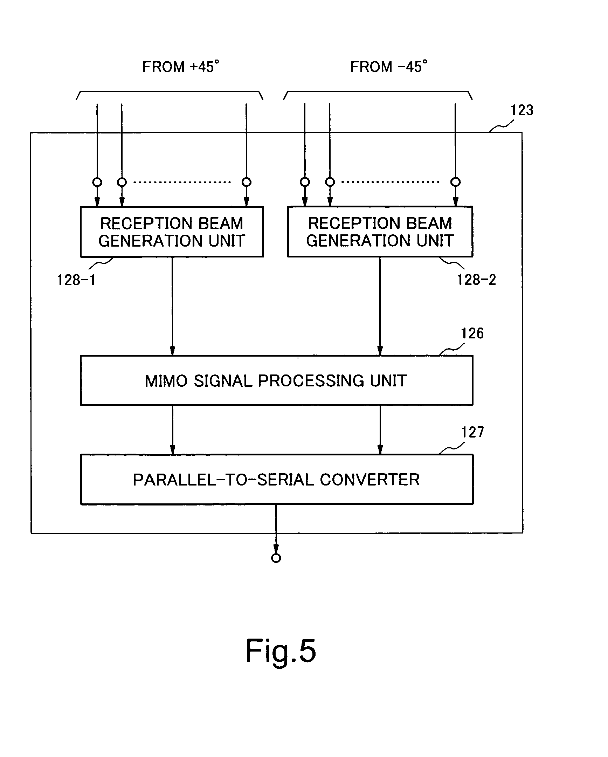

In Fig. 1, the reception unit 123 of the wireless base station 102 receives the uplink signal transmitted from the wireless terminal station 101 via the antennas 121-1 to 121-n. Fig. 5 is a functional block diagram showing an exemplary configuration of the reception unit 123 of the wireless base station 102. As shown in Fig. 5, the reception unit 123 includes a MIMO signal processing unit 126, a parallel-to-serial converter 127 and reception beam generation units 128-1 and 128-2.

The reception beam generation unit 128-1 is connected to each port for +45 degree polarized wave reception provided in the antennas 121-1 to 121-n. The reception beam generation unit 128-1 generates a directional beam with a +45 degree polarized wave based on the uplink signals input from the ports and outputs the directional beam to the MIMO signal processing unit 126. The reception beam generation unit 128-2 is connected to each port for -45 degree polarized wave reception provided in the antennas 121-1 to 121-n. The reception beam generation unit 128-2 generates a directional beam with a -45 degree polarized wave based on the uplink signal input from the ports and outputs the directional beam to the MIMO signal processing unit 126.

The MIMO signal processing unit 126 performs MIMO signal processing for the uplink signals input from the reception beam generation units 128-1 and 128-2. The MIMO signal processing is similar to well-known MIMO signal processing.

The parallel-to-serial converter 127 converts parallel uplink signals processed by the MIMO signal processing unit 126 into a serial signal. Here, the parallel-to-serial converter 127 converts two data rows (parallel) into one data row (serial).

Further, in Fig. 1 to Fig. 5, only components and functional blocks regarding the present invention are shown in the configuration of the wireless terminal station 101, the wireless base station 102, the transmission units 112 and 122 and the reception units 113 and 123.

### (Operation)

Next, processing in a radio communication system using a cross-polarized wave as shown in Fig. 1 to Fig. 5 will be described. First, processing in which the uplink signal is transmitted to the wireless base station 102 from the wireless terminal station 101 is described.

A data row source (not shown) sends one data row as an uplink signal to the serial-to-parallel converter 115. The serial-to-parallel converter 115 divides the data row into two arbitrary data rows. One of the two data rows is output to the modulation unit 114-1 and the other of the two data rows is output to the modulation unit 114-2.

The uplink signals input to the modulation units 114-1 and 114-2 are modulated in order to be transmitted on the radio transmission line. The modulated signals are transmitted to the wireless base station 102 via the antennas 111-1 and 111-2. Here, an interval of the antenna 111-1 and antenna 111-2 is 1/2 of wavelength. However, because the wireless terminal station 101 moves in a non line of sight, fading correlation is small and a condition of a MIMO transmission is satisfied.

The uplink signal transmitted from the wireless terminal station 101 is received by the wireless base station 102. Here, because the antennas 121-1 to 121-n are installed in an upper place of the wireless base station 102 and arranged in an array configuration at intervals of 1/2 wavelength, the antennas 121-1 to 121-n have high fading correlation. Therefore, the reception beam generation units 128-1 and 128-2 generate directional beams with polarized waves of +45 degrees and -45 degrees respectively. By performing usual adaptive array antenna processing, the reception beam generation units 128-1 and 128-2 can perform a beam steering and a null steering. Thereby, a high-quality transmission line can be secured.

The uplink signal transmitted from the wireless terminal station 101 is received by the antennas 121-1 to 121-n. At this time, an uplink signal received with a polarized wave characteristic of + 45 degrees is output from each port of +45 degree polarized wave of antennas 121-1 to 121-n and is input to the reception beam generation unit 128-1. On the other hand, an uplink signal received with a polarized wave characteristic of -45 degrees is output from each port of -45 degree polarized wave of antennas 121-1 to 121-n and is input to the reception beam generation unit 128-2.

The reception beam generation unit 128-1 generates a directional beam with +45 degree polarized wave and the received uplink signal is output to the MIMO signal processing unit 126. The reception beam generation unit 128-2 generates a directional beam with -45 degree polarized wave and the received uplink signal is output to the MIMO signal processing unit 126.

A MIMO signal processing unit 126 processes the input uplink signal, and two separated data rows can be obtained. Here, the reception beam generation units 128-1 and 128-2 receive orthogonally polarized waves with +45 degrees and -45 degrees respectively. Accordingly, the signal fading correlation of the waves is small. Therefore, the MIMO signal processing unit 126 can obtain two data rows separated clearly based on the reception signal.

Two data rows obtained by the MIMO signal processing unit 126 are converted by the parallel-to-serial converter 127 into one data row. In such a way, one original data row which is transmitted by MIMO transmission can be obtained.

Next, processing in which the downlink signal is transmitted to the wireless terminal station 101 from the wireless base station 102 will be described. A data row source (not shown) inputs one data row as a downlink signal to the serial-to-parallel converter 125.

The serial-to-parallel converter 125 divides the one data row into two arbitrary data rows. One of two divided data rows is output to the modulation unit 124-1 and the other of two data rows is output to the modulation unit 124-2.

The modulation units 124-1 and 124-2 modulate the downlink signals in order to transmit the signals on the radio transmission line. The signals modulated by the modulation units 124-1 and 124-2 are output to the transmission beam generation units 129-1 and 129-2 respectively.

Here, because the antennas 121-1 to 121-n are installed in an upper place of the wireless base station 102 and are arranged in an array configuration at intervals of 1/2 wavelength, the antennas have high fading correlation. Therefore, the transmission beam generation units 129-1 and 129-2 generate directional beams with polarized waves of +45 degrees and -45 degrees respectively. By performing usual adaptive array antenna processing, the transmission beam generation units 129-1 and 129-2 can perform a beam steering and a null steering. Thereby, a high-quality transmission line can be secured.

Transmission beam generation units 129-1 and 129-2 generate directional beams for the input downlink data respectively. Two data rows, for which the directional beams are generated, are transmitted to the wireless terminal station 101 via the antennas 121-1 to 121-n, with polarized waves of +45 degrees and of -45 degrees respectively. That is, the data row input to the transmission beam generation unit 129-1 is transmitted from the antennas 121-1 to 121-n with +45 degrees polarized waves via the ports for +45 degrees polarized wave transmissions. On the other hand, the data row input to the transmission beam generation unit 129-2 is transmitted from the antennas 121-1 to 121-n with -45 degrees polarized waves via the ports for -45 degrees polarized wave transmissions. In transmission from the antennas 121-1 to 121-n, because +45 degrees polarized wave and -45 degrees polarized wave are orthogonal to each other, fading correlation therebetween is low and a condition of a MIMO transmission is satisfied.

The antennas 111-1 and 111-2 of the wireless terminal station 101 receive the downlink data transmitted from the wireless base station 102. The MIMO signal processing for the received downlink data is performed in the MIMO signal processing unit 116 to separate the received signal into two data rows. Here, since the wireless terminal station 101 moves in a non line of sight, fading correlation is small even if the interval of antennas 111-1 and 111-2 is 1/2 wavelength. Therefore, the MIMO signal processing unit 116 can obtain two data rows which are clearly separated based on the reception signals. A parallel-to-serial converter 117 converts two data rows separated in the MIMO signal processing unit 116 into one data row transmitted from the wireless base station 102.

In the exemplary embodiment, the wireless base station 102 performs the MIMO transmission using an array antenna including the antennas 121-1 to 121-n each having two orthogonally-polarized wave characteristics, and the wireless terminal station 101 performs the MIMO transmission using the antennas 111-1 and 111-2 having intermediate polarized wave characteristics therebetween. Moreover, in the wireless base station 102, the array antenna can form the directional beam. Thereby, the MIMO transmission and the directional beam formation can be carried out simultaneously and data transmission with a high speed and a high-quality is realized.

The transmission loss due to the difference in polarized wave characteristics may occur between the wireless base station 102 and the wireless terminal station 101. However, the loss is compensated and more gain can be obtained, because the antennas 121-1 to 121-n of the wireless base station 102 are configured as an array antenna. In the wireless base station 102, since the intervals of the antennas 121-1 to 121-n are not necessarily large, space for the antennas may be decreased. Thus the antennas can be easily installed.

### (Other exemplary embodiment)

Next, other exemplary embodiment of the present invention will be described with reference to drawings. In the embodiment shown in Fig. 1, each of antennas 121-1 to 121-n of the wireless base station 102 have polarized wave characteristics of +45 degrees and -45 degrees. However, an array antenna may be formed by using a plurality of antennas having a right-handed circularly polarized wave characteristic and a left-handed circularly polarized wave characteristic instead of such antennas above mentioned.

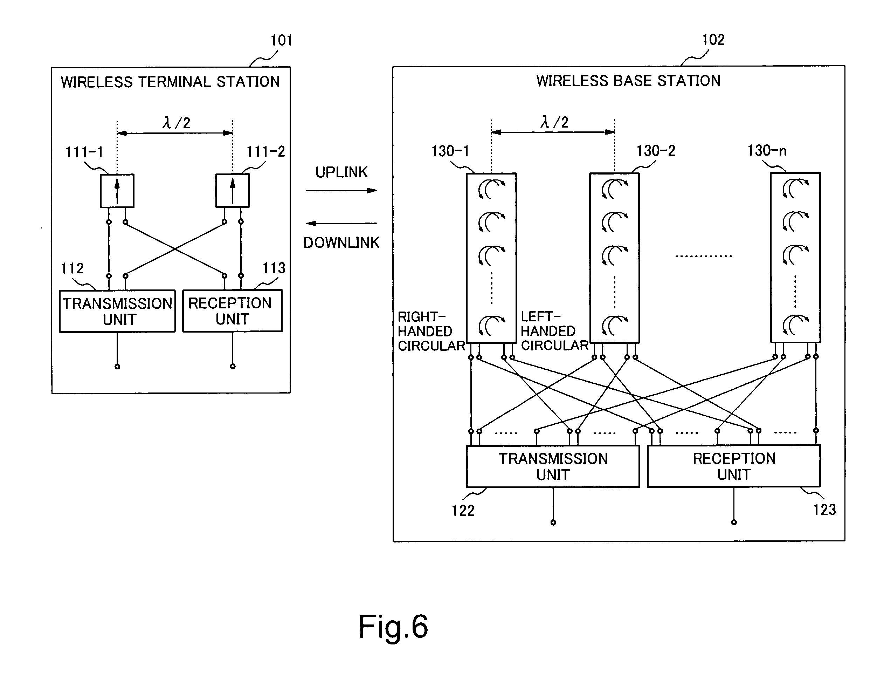

Fig. 6 is a functional block diagram showing a configuration of other exemplary embodiment of the present invention. In the embodiment, as shown in Fig. 6, n pieces of antennas 130-1 to 130-n each having a right-handed circularly polarized wave characteristic and a left-handed circularly polarized wave characteristic are arranged at 1/2 λ (wavelength) intervals to form an array antenna. Each port of the antennas 121-1 to 121-n for +45 degrees polarized wave characteristic in the exemplary embodiment shown in Fig. 1 corresponds to each port for right-handed circularly polarized wave characteristic of the antennas 130-1 to 130-n in the exemplary embodiment shown in Fig. 6. Similarly, each port of the antennas 121-1 to 121-n in the exemplary embodiment shown in Fig. 1 corresponds to each port for left-handed circularly polarized wave characteristic of the antennas 130-1 to 130-n in the exemplary embodiment shown in Fig. 6. In Fig. 6, the configuration other than the antenna 130-1 to 130-n is same as that shown in Fig. 1.

Since the antennas 111-1 and 111-2 of the wireless terminal station 101 have vertically polarized wave characteristics, the same advantages as that of the exemplary embodiment shown in Fig. 1 are obtained. In the exemplary embodiment of Fig. 6, if antennas having horizontally polarized wave characteristics are used as the antennas 111-1 and 111-2 of the wireless terminal station 101, the same advantages are obtained.

In the above mentioned embodiments, the wireless terminal station and the wireless base station are described as the radio communication apparatus. However, the invention can be applied to any apparatus which can perform a wireless communication.

In the present invention, the MIMO transmission and the directional beam formation can be carried out simultaneously and data transmission with high speed and high-quality can be realized easily.

In the related art described in Japanese Patent Application Laid-Open No. 2005-192185 mentioned above, for example, when two kinds of antennas including an antenna with a certain polarized wave characteristic and an antenna with an orthogonally-polarized wave characteristic are utilized, required kinds of pair of antennas have to be provided. Further, received signals in an antenna with polarized wave characteristics having sufficient reception characteristics become effective, and rate of the number of effective antennas to the number of installed antennas becomes low.

In the related art described in Japanese Patent Application Laid-Open No. 2002-290148, a plurality of antennas in which polarized wave characteristic is different each other in the antenna group have to be provided.

In the related art described in Japanese Patent Application Laid-Open No. 2006-33306, only control of polarized wave characteristics is disclosed and a beam forming is not disclosed.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

Further, it is noted that the inventor's intent is to retain all equivalents of the claimed invention even if the claims are amended during prosecution.

## Claims

1. A radio communication system for performing MIMO transmission comprising:
a first radio communication apparatus including an array antenna in which a plurality of first antennas each having two orthogonally polarized wave characteristics are arranged in an array configuration at predetermined intervals; and
a second radio communication apparatus including a plurality of second antennas each having a polarized wave characteristic which are intermediate in angle between the two orthogonally polarized wave characteristics, the plurality of second antennas being arranged at predetermined interval,
wherein the first radio communication apparatus forms a directional beam using the array antenna and performs the MIMO transmission using the two orthogonally polarized wave characteristics.

2. The radio communication system according to claim 1,
wherein the first radio communication apparatus further includes
a transmission beam generation unit which forms a directional transmission beam for each of the two orthogonally polarized wave characteristics, and
a reception beam generation unit which forms a directional reception beam for each of the two orthogonally polarized wave characteristics.

3. The radio communication system according to claim 2,
wherein the first radio communication apparatus further includes a converter which divides a data row to be transmitted into different data rows in order to perform MIMO transmission by transmitting the different data rows using the two orthogonally polarized wave characteristics.

4. The radio communication system according to claim 2,
wherein the first radio communication apparatus further includes
a MIMO signal processing unit which performs MIMO processing for received signals using the two orthogonally polarized wave characteristics and forms transmitted divided data rows, and
a converter which converts the divided data rows into an original data row.

5. A radio communication apparatus which is used for a radio communication system for performing MIMO transmission, the radio communication apparatus comprising an array antenna in which a plurality of antennas each having two orthogonally polarized wave characteristics are arranged in an array configuration at predetermined intervals, wherein the radio communication apparatus forms a directional beam using the array antenna and performs the MIMO transmission using the two orthogonally polarized wave characteristics.

6. The radio communication apparatus according to claim 5, further comprising:
a transmission beam generation unit which forms a directional transmission beam for each of the two orthogonally polarized wave characteristics; and
a reception beam generation unit which forms a directional reception beam for each of the two orthogonally polarized wave characteristics.

7. The radio communication apparatus according to claim 6, further comprising a converter which divides a data row to be transmitted into different data rows in order to perform MIMO transmission by transmitting the different data rows using the two orthogonally polarized wave characteristics.

8. The radio communication apparatus according to claim 6, further comprising:
a MIMO signal processing unit which performs MIMO processing for received signals using the two orthogonally polarized wave characteristics and forms transmitted divided data rows; and
a converter which converts the divided data rows into an original data rows.

9. A radio communication system for performing MIMO transmission, comprising:
a first radio communication apparatus including an array antenna in which a plurality of first antennas each having a right-handed circularly polarized wave characteristic and a left-handed circularly polarized wave characteristic are arranged in an array configuration at predetermined intervals; and
a second radio communication apparatus including a plurality of second antennas each having one of a vertically polarized wave characteristic and a horizontally polarized wave characteristic, the plurality of second antennas being arranged at predetermined interval,
wherein the first radio communication apparatus forms a directional beam using the array antenna and performs the MIMO transmission using the right-handed circularly polarized wave characteristic and the left-handed circularly polarized wave characteristic.

10. The radio communication system according to claim 9, wherein the first radio communication apparatus includes
a transmission beam generation unit which forms a directional transmission beam for each of the right-handed circularly polarized wave characteristic and the left-handed circularly polarized wave characteristic, and
a reception beam generation unit which forms a directional reception beam for each of the right-handed circularly polarized wave characteristic and the left-handed circularly polarized wave characteristic.

11. The radio communication system according to claim 10,
wherein the first radio communication apparatus includes a converter which divides a data row to be transmitted into different data rows in order to perform MIMO transmission by transmitting the different data rows using the right-handed circularly polarized wave characteristic and the left-handed circularly polarized wave characteristic.

12. The radio communication system according to claim 10, wherein the first radio communication apparatus includes
a MIMO signal processing unit which performs MIMO processing for received signals using the right-handed circularly polarized wave characteristic and the left-handed circularly polarized wave characteristic and forms transmitted divided data rows, and
a converter which converts the divided data rows into an original data row.

13. A radio communication apparatus used for a radio communication system for performing MIMO transmission, the radio communication apparatus comprising an array antenna in which a plurality of antennas each having a right-handed circularly polarized wave characteristic and a left-handed circularly polarized wave characteristic are arranged in an array configuration at predetermined intervals, wherein the radio communication apparatus forms a directional beam using the array antenna and performs the MIMO transmission using the two polarized wave characteristics.

14. The radio communication apparatus according to claim 13, further comprising:
a transmission beam generation unit which forms a directional transmission beam for each of the two polarized wave characteristics; and
a reception beam generation unit which forms a directional reception beam for each of the two polarized wave characteristics.

15. The radio communication apparatus according to claim 14, further comprising a converter which divides a data row to be transmitted into different data rows in order to perform MIMO transmission by transmitting the different data rows using the two orthogonally polarized wave characteristics.

16. The radio communication apparatus according to claim 14, further comprising:
a MIMO signal processing unit which performs MIMO processing for received signals using the two polarized wave characteristics and forms transmitted divided data rows; and
a converter which converts the divided data rows into an original data row.
